# EUROPÄISCHE PATENTSCHRIFT

(11) **EP 1 169 185 B1**
(45) Veröffentlichungstag und Bekanntmachung des Hinweises auf die Patenterteilung: **11.06.2003**
(21) Anmeldenummer: 00906369.4
(22) Anmeldetag: 22.02.2000
(51) Int. Cl.: B60G 3/26, B60G 3/20

(54) **RADAUFHÄNGUNG FÜR ANGETRIEBENE HINTERRÄDER EINES KRAFTFAHRZEUGES**
WHEEL SUSPENSION FOR DRIVEN REAR WHEELS OF A MOTOR VEHICLE
SUSPENSION POUR ROUES ARRIERE MOTRICES D'UN VEHICULE A MOTEUR

(30) Priorität: 06.03.1999 DE 19909937; 08.02.2000 DE 10005407
(43) Veröffentlichungstag der Anmeldung: 09.01.2002
(73) Patentinhaber: Dr. Ing. H.C.F. Porsche Aktiengesellschaft, 70435 Stuttgart (DE)
(72) Erfinder: KUNERT, Reinhard, D-71287 Weissach (DE)
(86) Internationale Anmeldenummer: EP0001435
(87) Internationale Veröffentlichungsnummer: WO00053440

(56) Entgegenhaltungen:
- EP-A- 0 239 449
- EP-A- 0 655 355
- WO-A-92/16386
- GB-A- 1 285 047
- US-A- 4 744 586
- US-A- 4 991 867
- BERKEFELD V ET AL: "DIE LSA-HINTERRADAUFHANGUNG DES NEUEN PORSCHE 911 CARRERA" ATZ AUTOMOBILTECHNISCHE ZEITSCHRIFT,DE,FRANCKH'SCHE VERLAGSHANDLUNG. STUTTGART, Bd. 96, Nr. 6, 1. Juni 1994 (1994-06-01), Seiten 340-342,344-34, XP000448786 ISSN: 0001-2785

## Beschreibung

Die Erfindung bezieht sich auf eine Radaufhängung für angetriebene Hinterräder eines Kraftfahrzeuges nach dem Oberbegriff des Anspruchs 1.

Aus der DE 19 38 850 C3 ist eine Radaufhängung bekannt, bei der die obere Lenkerebene aus zwei aufgelösten und zur Fahrzeuglängsmittenachse divergierend angestellten Querlenkern besteht, wobei die untere Lenkerebene aus einem Dreieckslenker gebildet ist und durch die Lenker bzw. die Lage der Lenker sich eine elastokinematische Achse ergibt. Desweiteren ist aus dem US-Report on the Sixth International Technical Conference on Experimental Safety Vehicles vom 12.10.1976, Seiten 656 bis 664 eine Radaufhängung mit oberen aufgelösten Querlenkern sowie einem unterem Dreieckslenker mit Spurstange bekannt, die eine elastokinematische Achse sowie eine Nachlaufachse bilden. Ferner ist aus der DE 37 14 034 C1 eine Radaufhängung für angetriebene Hinterräder in Kraftfahrzeugen mit oberen aufgelösten Lenkern und einem unteren Dreieckslenker mit einer Pendelstütze bekannt, wobei sich über die aufbauseitigen Lager und die radträgerseitigen Lager des Dreieckslenkers ein Nickpol zum Anfahr- und Bremsnickausgleich ergibt. Aus der gattungsbildenden WO-A-92/16386 ist eine Radaufhängung für angetriebene, gelenkte und ungelenkte Hinterräder eines Kraftfahrzeugs mit einem über ein Federbein aufbauseitig abgestützten Radträger bekannt. Dieser ist über zwei, eine obere Anlenkung bildende Einzellenker und einer aus einem Dreieckslenker bestehenden unteren Anlenkung sowie einem etwa in Fahrzeugquerrichtung verlaufenden Spurstangen-Lenker geführt. Die Einzellenker sind in Fahrzeugquerrichtung divergierend angeordnet und in zwei beabstandeten Gelenken des Radträgers gelagert, wobei der Dreieckslenker über ein Gelenk am Radträger gehalten wird und beide Anlenkungen eine lastkinematische Radschwenkachse und eine kinematische Schwenkachse bilden. Die beiden Anlenkungen sind in der Weise angeordnet und in Gelenken abgestützt, daß sich eine Radaufhängung ergibt, die einerseits ein sicheres Fahrverhalten bei allen Fahrzuständen mit gutem Fahrkomfort gewährleistet und andererseits die Radaufhängung in räumlich kompakter Form-im Fahrzeug anzuordnen ist.

Die der Erfindung zugrundeliegende Aufgabe besteht darin, die bekannte Radaufhängung so zu verbessern, daß sie kleinbauend und kompakt sowie vormontierbar und voreinstellbar ist und ein stabiles Fahrverhalten sowohl bei Kurven- als auch Geradeausfahrt gewährleistet ist

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Ausbildung der Radaufhängung mit oberen aufgelösten Lenkern und einem unteren Dreieckslenker mit Spurstange sowie entsprechend abgestimmten Kennungen in den Lenkerlagern eine Radaufhängung erzielt wird, die einen maximalen Anfahr- und Bremsnickausgleich gewährleistet und zudem bei auf das Rad einwirkenden Kräften elastokinematische Radstellungsänderungen ermöglicht und bei allen Kräften, wie Seitenkräften, Bremskräften und Lastwechselkräften vorspuruntersteuernd wirkt.

Hierzu besteht die Radaufhängung im wesentlichen aus oberhalb einer Raddrehachse angeordneten Radführunggliedern, bestehend aus zwei aufgelösten und zum aufbauseitigen Lager hin divergierend verlaufenden und in zwei beabstandeten Ebenen angeordneten Querlenkern. Zu beiden Seiten einer senkrechten Radmittenquerebene sind die Querlenker am Radträger angelenkt. Unterhalb der Raddrehachse sind weitere Radführungsglieder, bestehend aus einem Dreieckslenker sowie einer Spurstange vorgesehen, wobei der Dreieckslenker - in Fahrtrichtung gesehen - vor der senkrechten Radmittenquerebene angelenkt und in einer in Fahrtrichtung angestellten Schrägebene liegt. Die Spurstange ist hinter der Radmittenquerebene am Radträger gelagert. Durch Polstrahlen, welche senkrecht zur Bewegungsrichtung von radträgerseitigen Lagern des oberen und unteren Lenkers verlaufen, ergibt sich ein Nickpol, der vor und oberhalb der durch die Raddrehachse verlaufenden Ebene liegt und eine Antidive- und Antisquatwirkung ergibt.

Die beiden oberen Querlenker sind beispielsweise als sogenannte Stablenker ausgeführt und bilden mit den unteren Radführungsgliedern eine elastokinematische Achse, wobei die beiden oberen Querlenker einen ideellen oberen Pol für diese Achse bilden, und der von der Spurstange und dem Dreieckslenker gebildete untere Pol hinter der senkrechten Radmittenquerebene und außerhalb der Spurweite liegt. Durch diese beiden Pole erfährt die elastokinematische Achse einen Durchstoßpunkt in der Radaufstandsebene außerhalb der Spurweite und in Fahrtrichtung gesehen hinter der senkrechten Radmittenquerebene.

Die Lage der elastokinematischen Achse wird festgelegt, indem der eine Lagerpunkt des oberen Lenkers vor der senkrechten Radmittenquerebene näher an der senkrechten Radmittenquerebene liegt als der Lagerpunkt des weiteren, hinter der senkrechten Radmittenquerebene liegenden Lagers des oberen Querlenkers.

Des Weiteren wird mittels der beiden oberen Querlenker ein ideeller oberer Pol und durch das radträgerseitige Lager des unteren Dreieckslenkers ein konstruktiver Pol für die kinematische Nachlaufachse gebildet. Der Durchstoßpunkt dieser Nachlaufachse in der Radaufstandsebene liegt vor der senkrechten Radmittenquerebene und innerhalb der Spurweite. Der von dem Dreieckslenker im Lager des Radträgers gebildete konstruktive Pol liegt hierzu in Fahrtrichtung gesehen vor der senkrechten Radmittenquerebene und innerhalb der Spurweite. Der obere ideelle Pol liegt dagegen etwa in der senkrechten Radmitte in Querebene und außerhalb der Spurweite. Diese Nachlaufachse weist hierdurch einen Durchstoßpunkt in der Radaufstandsebene auf.

Zur Erzielung der bestimmten Position der kinematischen Nachlaufachse sowie der elastokinematischen Achse sind die Lagerpunkte der oberen Querlenker am Radträger zwischen den Lagerpunkten der Spurstange und des Dreiecklenkers angeordnet, wobei die Querlenker sich zu den aufbauseitigen Lagern divergierend erstrecken und hierbei einen Lenkerarm des Dreieckslenkers und die Spurstange überkreuzt.

Somit wird bei allen auf das Rad einwirkenden Kräften tendenziell eine elastokinematische Radstellungsänderung erzielt, weil die entsprechend abgestimmten Kennungen der Lenkerlager und die Lage der elastokinematischen Achse sowie die Lage der kinematischen Nachlaufachse die Art und Größe dieser Radstellungsänderung beeinflussen.

Die aufeinander abgestimmten Kennungen der Lager der Radführungsglieder bestimmen in Abhängigkeit von der geometrischen Anordnung der Radführungsglieder und der somit gebildeten ideellen und konstruktiven Pole und Achsen die Radstellungsänderungen unter der Einwirkung von Kräften auf das Rad. So wird sich aufgrund der Lage der elastokinematischen Achse und der Nachlaufachse bei auf das Rad einwirkenden Kräften eine ideelle Achse zwischen diesen beiden anderen Achsen, nämlich der elastokinematischen Achse und der Nachlaufachse, ergeben, um die sich das Rad bei allen einwirkenden Kräften elastokinematisch bewegen kann.

So weisen die aufbauseitigen Lager des Dreieckslenkers hierzu in radialer Belastungsrichtung eine wesentlich steifere Kennung auf als die Kennungen in axialer Belastungsrichtung betragen. Die radialen Lagerkennungen der beiden oberen Querlenker sind insgesamt gleich und weisen eine geringere radiale Kennung auf als die Lagerkennungen der aufbauseitigen Lager des Dreieckslenkers. Die radialen Lagerkennungen der Spurstange sind insgesamt steifer ausgeführt als die radialen Lagerkennungen der unteren Querlenker.

Durch diese Abstimmung der Lagerkennungen und durch die Lage der elastokinematischen Achse und der Nachlaufachse soll bei Seiten- und Bremskräften sowie bei Längskräften, die entgegen der Fahrtrichtung wirken, die Wirkung eines in-Nachspurgehens des Rades durch ein In-Vorspurgehens des Rades derart überlagert werden, daß sich das Rad in Richtung Vorspur verstellen kann. Diese Verstellung erfolgt dann über die aus den beiden Achsen gebildete ideelle Schwenkachse, welche sich räumlich zwischen der elastokinematischen Achse und der Nachlaufachse einstellt und einen Durchstoßpunkt in einem Flächenbereich der Radaufstandsebene hinter der senkrechten Radmittenquerebene und außerhalb der Spurweite aufweist. Bei negativen Längskräften (Antriebskräften), die in Fahrtrichtung wirken, stellt sich eine Radstellungsänderung in Richtung Nachspur ein.

Die Bildung eines Nickpols - in bezug auf die Fahrtrichtung - vor und oberhalb der Raddrehachse zur Erzielung einer Antidive-Wirkung, d.h. der Verhinderung des Anhebens des Fahrzeugs bei einem Bremsvorgang und einer Antisquat-Wirkung, d.h. dem Verhindern des Eintauchens des Fahrzeugs beim Anfahren wird durch die schräge Ausrichtung des Dreieckslenkers sowie der Lage der beiden oberen Querlenker zueinander erzielt.
Das Dämpfer- bzw. Federbein erstreckt sich unter einem Winkel quer zum Fahrzeug zur Fahrzeuglängsmittenachse und ist zwischen dem Dreieckslenker und der Spurstange und den beiden Querlenkern angeordnet und stützt sich am Radträger sowie am Fahrzeugaufbau ab. Durch diese geneigte Anordnung des Federbeines wird hauptsächlich ein relativ großer Gepäckraum sowie eine geringe Ladehöhe des Fahrzeugs erzielt.

Ein Ausführungsbeispiel der Erfindung ist in den Zeichnungen dargestellt und wird im folgenden näher beschrieben.

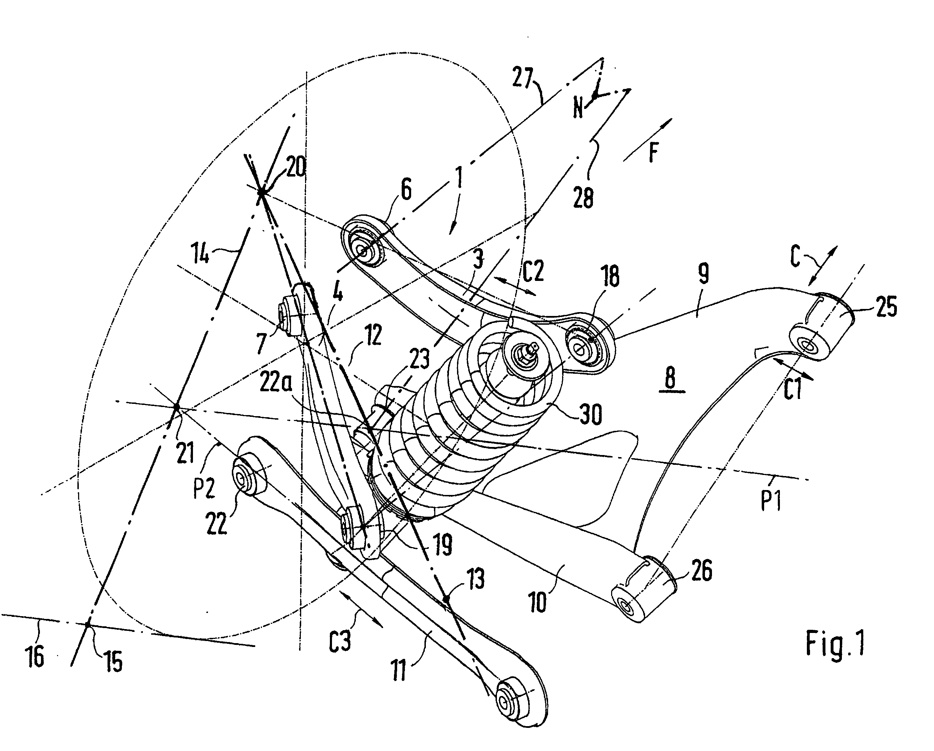

Es zeigen
- Fig. 1: eine schaubildliche Darstellung einer Radaufhängung,

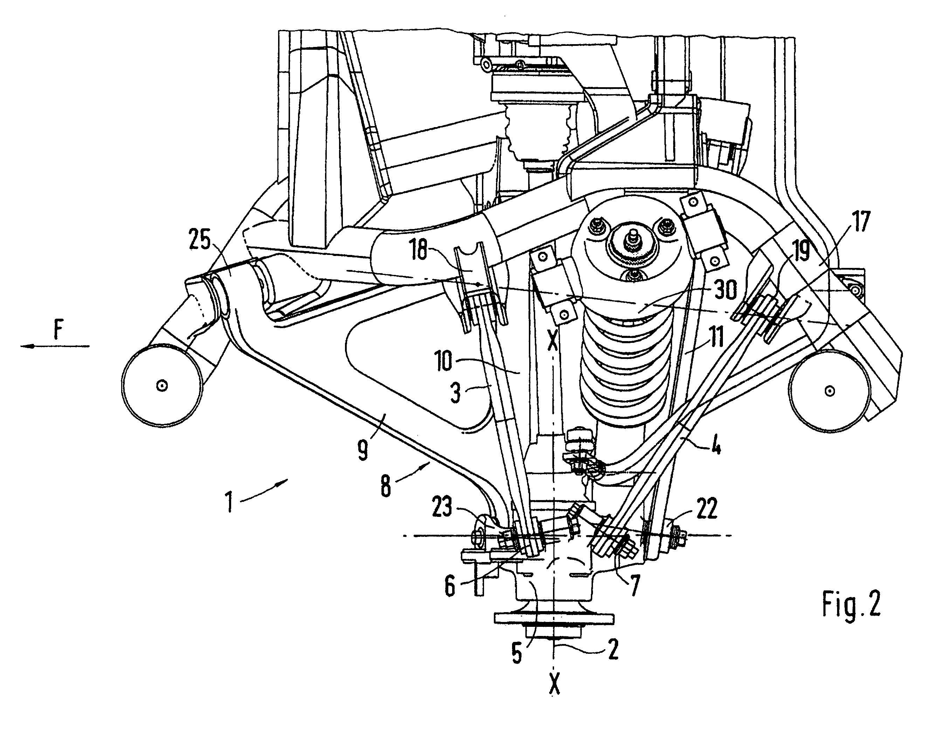

- Fig. 2: eine Draufsicht der Radaufhängung im Einbauzustand,

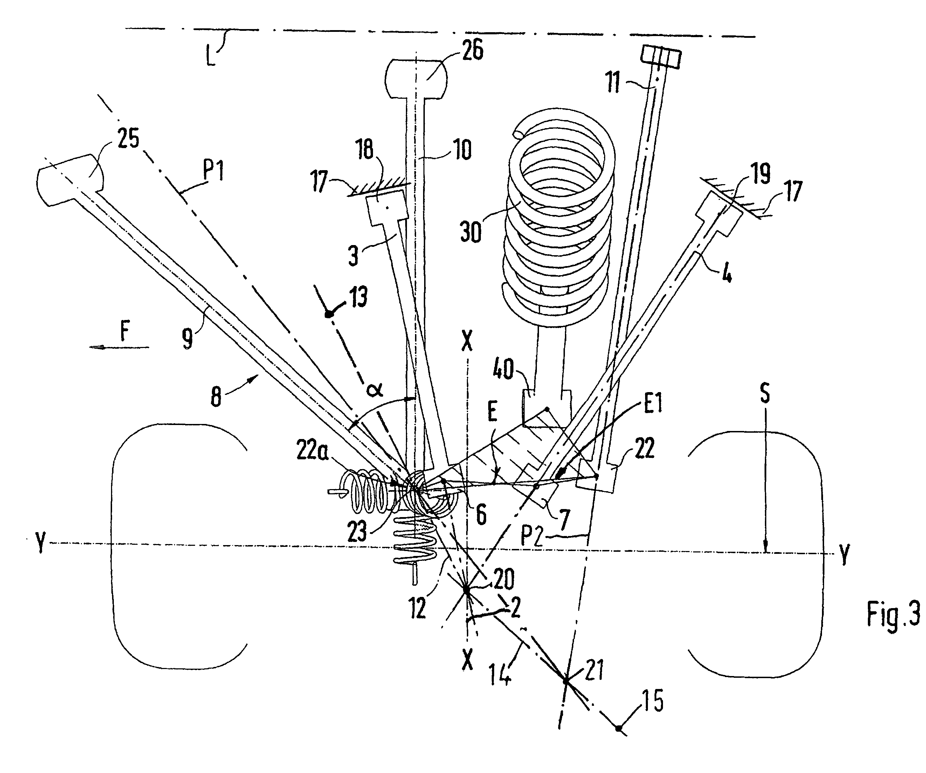

- Fig. 3: eine schematische Darstellung der Radaufhängung in Draufsicht,

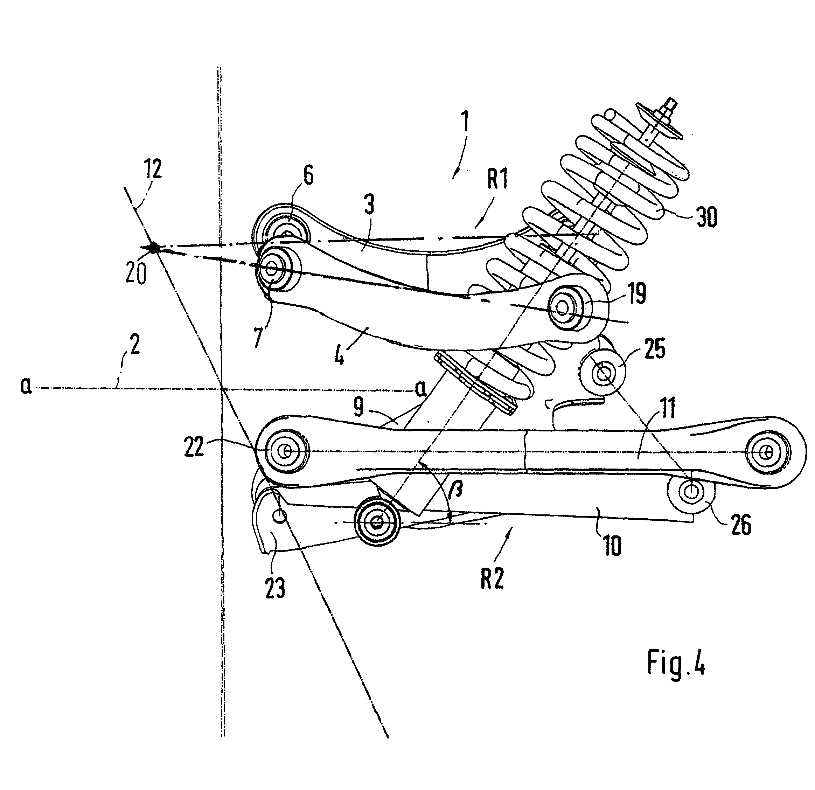

- Fig. 4: eine schematische Darstellung der Radaufhängung von hinten gesehen und

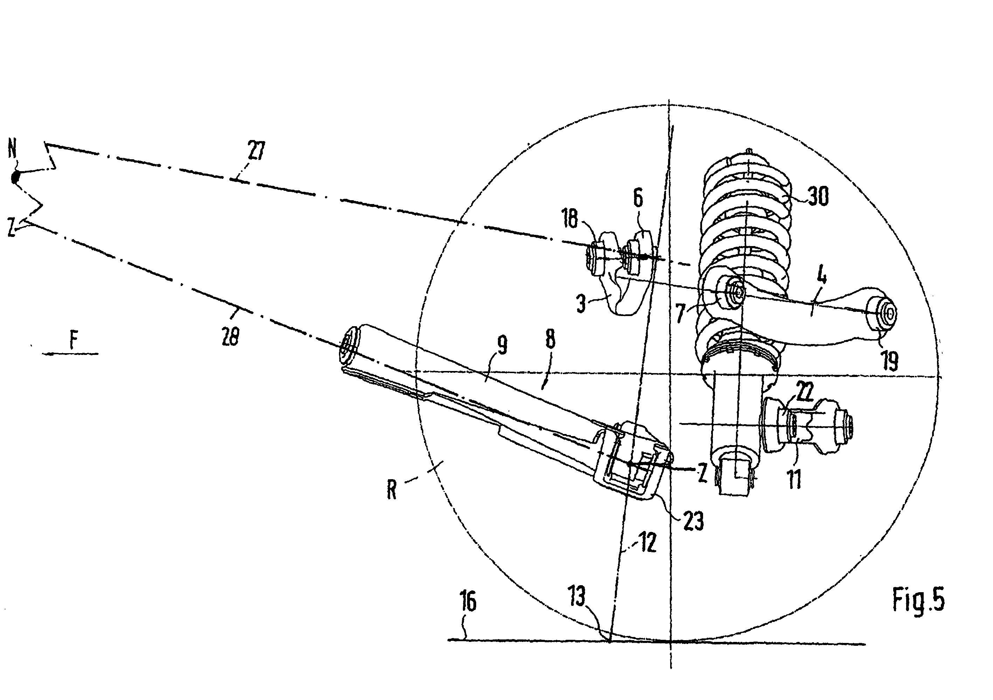

- Fig. 5: eine schematische Darstellung der Radaufhängung von der Seite gesehen.

Die Radaufhängung 1 für eine Hinterachse eines Kraftfahrzeugs, insbesondere eines Geländewagens umfaßt ein oberhalb einer Raddrehachse 2 angeordnetes und aus zwei Querlenkern 3, 4 bestehendes Radführungsglied R1, das an einem Radträger 5 mittels zweier Lager 6, 7 angelenkt ist. Unterhalb der Raddrehachse 2 ist ein weiteres Radführungsglied R2, bestehend aus einem Dreieckslenker 8 mit Lenkerarmen 9, 10 sowie einer Spurstange 11 angeordnet.

Die Radführungsglieder R1 und R2 sind derart im Raum angeordnet, daß sich ein Nickpol N sowie eine kinematische Nachlaufachse 12 mit einem Durchstoßpunkt bzw. einen Pol 13 in der Radaufstandsebene 16 sowie eine elastokinematische Achse 14 mit einem Durchstoßpunkt bzw. einen Pol 15 in der Radaufstandsebene 16 ergibt.

Die beiden Querlenker 3, 4 sind vom Radträger 5 aus divergierend zum Fahrzeugaufbau bzw. zu einem Fahrschemel 17 verlaufend angeordnet und aufbauseitig in Lagern 18, 19 schwenkbar abgestützt. Der eine Querlenker 3 liegt - in Fahrtrichtung F gesehen - vor einer senkrechten Radmittenquerebene X-X, wobei das Lager 6 unmittelbar benachbart dieser Ebene X-X angeordnet ist. Der weitere Querlenker 4 ist - in bezug auf die Fahrtrichtung F - hinter der senkrechten Radmittenquerebene X-X angeordnet, wobei das Lager 7 in einem größeren Abstand zu dieser Ebene X-X angeordnet ist als das Lager 6 des Querlenkers 3. Die beiden Lenker 3, 4 liegen in unterschiedlichen Höhenebenen.

Ein durch die beiden Querlenker 3, 4 gebildeter oberer ideeller Pol 20 für die Bestimmung der kinematischen Nachlaufachse 12 und für die elastokinematische Achse 14 liegt etwa in der senkrechten Radmittenquerebene X-X bzw. unmittelbar daneben. Der untere ideelle Pol 21 der elastokinematischen Achse 14 wird durch den Dreieckslenker 8 und die Spurstange 11 sowie dem Dreiecklenker 8 gebildet. Diese elastokinematische Achse 14 weist einen Durchstoßpunkt 15 in der Radaufstandsebene 16 auf, der - in bezug auf die Fahrtrichtung F - hinter der senkrechten Radmittenquerebene X-X und außerhalb der Spurweite S bzw. der Radmittenlängsebene Y-Y liegt.

Damit ein In-Vorspurgehen des Rades unter dem Einfluß von auf das Rad einwirkenden Kräften erfolgen kann, ist der Durchstoßpunkt 13 der Nachlaufachse innerhalb der Spurweite S - in Bezug auf die senkrechte Radmittenquerebene X-X - vor dieser angeordnet und der Durchstoßpunkt 15 der elastokinematischen Achse 14 ist hinter der senkrechten Radmittenquerebene X-X und außerhalb der Spurweite S angeordnet. Aufgrund dieser beiden Achsen ergibt sich für die weitere ideelle Achse ein Durchstoßpunkt in der Radaufstandsebene und in der Radmittenebene in einem Flächenbereich hinter der senkrechten Radmittenquerebene und außerhalb der Spurweite.

Hierdurch wird mit der abgestimmten Lagerkennung der Radführungsglieder bei auf das Rad einwirkenden Kräften erreicht, das einem In-Nachspurgehen des Rades ein In-Vorspurgehen des Rades überlagert ist, da die Momentenverhältnisse aufgrund der Lage der Durchstoßpunkte entsprechend ausgelegt sind.

Die beiden Querlenker 3, 4 sind vorzugsweise in verschiedenen Höhenebenen angeordnet, wobei der vornliegende Lenker 3 oberhalb des weiteren hintenliegenden Lenkers 4 angeordnet ist Diese Lage der Lenker 3, 4 bzw. eines der Lenkerlager 3 oder 4 beeinflußt die Position des Nickpols N.

Die radträgerseitigen Lager 6, 7 und 22, 23 der unteren und oberen Radführungsglieder R1 und R2 sind in einer etwa vertikalen windschiefen Ebene E angeordnet, die annähernd parallel zur senkrechten Radmittenlängsebene Y-Y verläuft. Eine durch die Lager 6, 7 gelegte vertikale Ebene E verläuft etwa parallel zu der senkrechten Ebene Y-Y. Die weitere durch die Lager 22, 23 gelegte vertikale Ebene E1 ist schrägverlaufend zur Ebene Y-Y angeordnet.

Der Dreieckslenker 8 umfaßt einen nahe der senkrechten Radmittenquerebene X-X angeordneten Lenkerarm, der nahezu parallel zu dieser Ebene X-X angeordnet ist und ein um einen Winkel a abgespreizten weiteren, nach vorne ragenden Lenkerarm 9 aufweist. Der Dreieckslenker 8 ist über ein Lager 23 am Radträger 5 gelagert und aufbauseitig in Lagern 25, 26 gehalten. Durch die Kennungen dieser Lager 25, 26 ergibt sich die Richtung des Polstahls P1, der durch das Lager 23 verläuft und sich mit dem Polstrahl P2 des Lenkers 11 im Punkt 21 trifft.

Der Dreieckslenker 8 ist in Fahrtrichtung F ansteigend in einer Schrägebene Z-Z mit dem radträgerseitigem Lager 23 und der Querlenker 3 ist mit dem radträgerseitigen Lager 6 versehen. Diese beiden Lager bestimmen im wesentlichen durch ihre Bewegungsrichtung die Polstrahlen 27, 28 und somit den Nickpol N für einen Antidive und einen Antisquat. Der Nickpol N liegt oberhalb und vor der Raddrehachse 2 in bezug auf die Fahrtrichtung F.

Die Querlenker 3, 4 weisen radiale Lagerkennungen C2 von insgesamt ca. 3.000 N/mm und mehr auf, wobei diese Elastizitäten insgesamt beide Lager umfaßt. Die Kennungen C und C1 der Lenkerarme 9, 10 des Dreieckslenkers 8 sind in axialer Richtung etwa gleich und betragen ca. 1.000 N/mm, wogegen in radialer Richtung eine härtere Kennung C von ca. 6.000 N/mm vorgesehen ist. Die Spurstange 11 weist insgesamt eine radiale Kennung C3 von ca. 7.500 N/mm auf und ist somit radial wesentlich härter gelagert als der Dreieckslenker 8 und die oberen Querlenker 3, 4. Die Kennungen C, C1, C2 und C3 der Radführungsglieder R1 und R2 sind so ausgelegt, daß sich nur geringe Vorspur- und Sturzänderungen ergeben. Diese geringen Vorspuränderungen werden im wesentlichen durch entgegengerichtete Momente bei auf das Rad einwirkenden Kräften erzielt.

Nach einer weiteren Ausführung kann das vordere Lenkerlager 25 (in Fahrtrichtung F gesehen) des unteren Dreieckslenkers 8 radial weich ausgeführt sein, um den Längskomfort bei auftretenden Längsstößen sowie bei Fahrbahnrauhigkeiten günstig zu beeinflussen.

Zwischen den oberen Querlenkern 3, 4 sowie zwischen dem Lenker 10 des Dreieckslenkers 8 und der Spurstange 11 erstreckt sich in geneigter Lage das Feder-/Dämpferbein 30, das unter einem Winkel (β) zur Fahrzeuglängsmittenachse L schräg angestellt ist.

## Patentansprüche

1. Radaufhängung für angetriebene Hinterräder eines Kraftfahrzeugs mit einem schräggestellten Feder-/Dämpferbein (30) und mit einem das Rad (R) lagernden Radträger (5), der über in vertikalen Abständen zueinander angeordnete Radführungsglieder (R1, R2) mit dem Fahrzeug verbunden ist und diese Radführungsglieder (R1, R2) oberhalb und unterhalb einer durch eine Raddrehachse (2) verlaufenden horizontalen Ebene angeordnet und am Radträger (5) sowie am Fahrzeugaufbau gelagert sind, wobei sich am Rad (R) eine elastokinematische Achse (14) sowie eine kinematische Nachlaufachse (12) bildet, und dass das oberhalb der Raddrehachse (2) angeordnete Radführungsglied (R1) aus zwei aufgelösten und zu aufbauseitigen Lagern (18, 19) divergierend verlaufenden und in zwei beabstandeten Ebenen angeordneten oberen Querlenkern (3, 4) besteht und diese zu beiden Seiten einer senkrechten Radmittenquerebene (x - x) am Radträger (5) angelenkt sind, und dass das weitere unterhalb der Raddrehachse (2) angeordnete Radführungsglied (R2) aus einem Dreieckslenker (8) sowie einer Spurstange (11) besteht, wobei der Dreieckslenker (8) - in Fahrtrichtung (F) gesehen - vor der senkrechten Radmittenquerebene (x - x) angelenkt ist und der Dreieckslenker (8) in einer in Fahrtrichtung (F) angestellten Schrägebene (Z-Z) liegt und die Spurstange (11) hinter dieser Radmittenquerebene (X-X) am Radträger (5) gelagert ist, und dass durch abgestimmte Lagerkennungen der Radführungsglieder (R1, R2) und durch die Lage der elastokinematischen Achse (14) im Zusammenwirken mit der Nachlaufachse (12) sich bei allen auf das Rad einwirkenden Kräften eine ideelle Schwenkachse für das Rad (R) bildet, und dass durch vorgegebene Bewegungsrichtungen von radträgerseitigen Lagern (23, 6) der beiden Lenker (10, 3) der Radführungsglieder (R1, R2) sich Polstrahlen (27, 28) ergeben, die sich vor und oberhalb einer durch die Raddrehachse (2) verlaufenden horizontalen Ebene (a-a) treffen und einen Nickpol (N) für einen Antidive und Antisquat bilden, wobei die beiden oberen Querlenker (3, 4) zusammen einen ideellen oberen Pol (20) für die kinematische Nachlaufachse (12) bilden, der außerhalb der Spurweite (S) liegt, wobei ein unterer Punkt (22a) für die Lage der Nachlaufachse (12) vom Lager (23) des Dreieckslenkers (8) gebildet wird, der - in Fahrtrichtung (F) gesehen - vor der senkrechten Radmittenquerebene (X-X) und innerhalb der Spurweite (S) liegt und die Lagerpunkte (6, 7) der oberen Querlenker (3, 4) annähernd in einer vertikalen Ebene (E) liegen, welche in etwa parallel zu einer Radmittenlängsebene (Y-Y) verläuft und wonach die Lagerpunkte (22, 23) der Spurstange (11) und des unteren Dreieckslenkers (8) in einer weiteren vertikalen Ebene (E1) liegen, welche die vertikale Ebene (E) kreuzt, **dadurch gekennzeichnet, daß** der durch die beiden oberen Querlenker (3, 4) gebildete ideelle obere Pol (20) für die kinematische Nachlaufachse (14) zumindest auch in der senkrechten Radmittenquerebene (X-X) liegt, und daß sowohl der vordere obere Querlenker (3) zu dem Lenkerarm (10) des untenliegenden Dreieckslenkers (8) als auch der hintere obere Querlenker (4) zu der untenliegenden Spurstange (11) überkreuzend angeordnet ist..

2. Radaufhängung nach Anspruch 1, **dadurch gekennzeichnet, dass** die aufbauseitigen Lager (25, 26) des Dreieckslenkers (8) in radialer Belastungsrichtung eine wesentlich steifere Kennung (C1) aufweisen als die Kennung (C) in axialer Belastungsrichtung beträgt, wobei das vordere aufbauseitige Lager (25) in radialer Richtung eine weichere Kennung aufweist, als das hintere aufbauseitige Lager (26).

3. Radaufhängung nach den Ansprüchen 1 oder 2, **dadurch gekennzeichnet, dass** die radialen Lagerkennungen (C2) der beiden oberen Querlenker (3, 4) insgesamt gleich sind und eine geringere radiale Kennung aufweisen als die Lagerkennungen (C1) der aufbauseitigen Lager (25, 26) des Dreieckslenkers (8).

4. Radaufhängung nach den Ansprüchen 1, 2 oder 3, **dadurch gekennzeichnet, dass** die radialen Lagerkennungen (C3) der Spurstange (11) insgesamt steifer sind als die radialen Lagerkennungen (C2) der oberen Querlenker (3, 4).

5. Radaufhängung nach einem oder mehreren der vorhergehenden Ansprüche, **dadurch gekennzeichnet, dass** die abgestimmten Lagerkennungen der Radführungsglieder (R1, R2) sowie die Lage der elastokinematischen Achse (14) und der Nachlaufachse (12) bei allen auf das Rad einwirkenden Kräften eine aus diesen beiden Achsen (12) und (14) abgeleitete ideelle Schwenkachse für das Rad ergibt.

6. Radaufhängung nach einem oder mehreren der vorhergehenden Ansprüche, **dadurch gekennzeichnet, dass** das radträgerseitige Lager (40) des Feder-/Dämpferbeines (30) - in bezug auf die Fahrtrichtung (F) - näher am radträgerseitigen Lager (22) der Spurstange (11) liegt als zum radträgerseitigen Lager (23) des unteren Dreieckslenkers (8).

7. Radaufhängung nach den Ansprüchen 1 oder 6, **dadurch gekennzeichnet, dass** das Feder-/Dämpferbein (30) annähernd parallel zur senkrechten Radmittenquerebene (X-X) angeordnet ist.

## Claims

1. A wheel suspension for driven rear wheels of a motor vehicle, having an obliquely orientated spring-and-shock-absorber strut (30) and having a wheel carrier (5) which carries the wheel (**R**) and which is connected to the vehicle by way of wheel-control members (**R1, R2**) arranged at vertical distances from each other, and the said wheel-control members (**R1 R2**) are arranged above and below a horizontal plane extending through a rotational axis (2) of the wheel and are mounted on the wheel carrier (5) as well as on the vehicle body, wherein an elastokinematic axis (14) and a kinematic trailing axis (12) are formed on the wheel (**R**), and the wheel-control member (**R1**) arranged above the rotational axis (2) of the wheel comprises two detached upper transverse control arms (3, 4) extending in a diverging manner towards bearings (18, 10) on the body and arranged in two spaced planes and they are articulated to the wheel carrier (5) on both sides of a vertical median transverse plane (**x-x**) of the wheel, and the further wheel-control member (**R2**) arranged below the rotational axis (2) of the wheel comprises an A-frame arm (8) and a steering tie rod (11), wherein the A-frame arm (8) is articulated in front of the vertical median transverse plane (**x-x**) of the wheel - as viewed in the direction of travel (**F**) - and the A-frame arm (8) is situated in an oblique plane (**Z-Z**) set in the direction of travel (**F**) and the steering tie rod (11) is mounted on the wheel carrier (5) behind the said median transverse plane (**X-X**) of the wheel, and an ideal pivot axis is formed for the wheel (**R**) by adapted bearing characteristics of the wheel-control members (**R1, R2**) and by the position of the elastokinematic axis (14) in co-operation with the trailing axis (12) in the case of all the forces acting upon the wheel, and pole radials (27, 28) are formed by pre-set directions of movement of bearings (23, 6) - on the wheel carrier - of the two control arms (10, 3) of the wheel-control members (**R1, R2**), and they meet in front of and above a horizontal plane (**a-a**) extending through the rotational axis (2) of the wheel and form a pitch pole (**N**) for an anti-dive and an anti-squat, wherein the two upper transverse control arms (3, 4) together form an ideal upper pole (20) for the kinematic trailing axis (12) which [upper pole] is situated outside the track width (S), wherein a lower point (22a) for the position of the trailing axis (12) is formed by the bearing (23) of the A-frame arm (8) which - as viewed in the direction of travel (**F**) - is situated in front of the vertical median transverse plane (**X-X**) of the wheel and inside the track width (**S**), and the bearing points (6, 7) of the upper transverse control arms (3, 4) are situated substantially in a vertical plane (**E**) which extends substantially parallel to a median longitudinal plane (**Y-Y**) of the wheel and after which the bearing points (22, 23) of the steering tie rod (11) and of the lower A-frame arm (8) are situated in a further vertical plane (**E1**) which intersects the vertical plane (**E**), **characterized in that** the ideal upper pole (20) - formed by the two upper transverse control arms (3, 4) - for the kinematic trailing axis (14) [*sic - recte* (12)] is also situated at least in the vertical median transverse plane (**X-X**) of the wheel, and both the front upper transverse control arm (3) is arranged crossing over the control arm (10) of the A-frame arm (8) situated below and the rear upper transverse control arm (4) is arranged crossing over the steering tie rod (11) situated below.

2. A wheel suspension according to Claim 1, **characterized in that** the bearings (25, 26) of the A-frame arm (8) on the body have a considerably more rigid characteristic (**C1**) in the direction of radial loading than the characteristic (C) in the direction of axial loading, wherein the front bearing (25) on the body has a more yielding characteristic in the radial direction than the rear bearing (26) on the body.

3. A wheel suspension according to Claim 1 or 2, **characterized in that** the radial bearing characteristics (**C2**) of the two upper transverse control arms (3, 4) are equal as a whole and have a smaller radial characteristic than the bearing characteristics (**C1**) of the bearings (25, 26) of the A-frame arm (8) on the body.

4. A wheel suspension according to Claim 1, 2 or 3, **characterized in that** the radial bearing characteristics (**C3**) of the steering tie rod (11) as a whole are more rigid than the radial bearing characteristics (**C2**) of the upper transverse control arms (3, 4).

5. A wheel suspension according to one or more of the preceding Claims, **characterized in that** the adapted bearing characteristics of the wheel-control members (**R1, R2**) and the position of the elastokinematic axis (14) and the trailing axis (12) results in an ideal pivot axis - derived from the said two axes (12) and (14) - for the wheel in the case of all the forces acting upon the wheel.

6. A wheel suspension according to one or more of the preceding Claims, **characterized in that** the bearing (40) of the spring-and-shock-absorber strut (30) on the wheel carrier is closer - with respect to the direction of travel (**F**) - to the bearing (22) of the steering tie rod (11) on the wheel carrier than to the bearing (23) of the lower A-frame arm (8) on the wheel carrier.

7. A wheel suspension according to Claim 1 or 6, **characterized in that** the spring-and-shock-absorber strut (30) is arranged substantially parallel to the vertical median transverse plane (**X-X**) of the wheel.

## Revendications

1. Suspension pour roues arrières motrices d'un véhicule à moteur comprenant une jambe à ressort/amortisseur (30) inclinée et un support de roue (5) supportant la roue (R), qui est relié au véhicule à l'aide d'éléments de guidage de roue (R1, R2) disposés à des distances verticales les uns par rapport aux autres, et ces éléments de guidage de roue (R1, R2) étant disposés au-dessus et en dessous d'un plan horizontal s'étendant à travers un axe de rotation de roue (2) et étant logés sur la structure du véhicule, un axe élastocinématique (14) ainsi qu'un axe entraîné cinématique (12) étant formé sur le roue (R), l'élément de guidage de roue (R1) disposé au-dessus de l'axe de rotation de roue (2) consistant en deux bras oscillants transversaux (3, 4) supérieurs décomposés, s'étendant de façon divergente par rapport à des paliers (18, 19) situés côté structure et étant disposés dans deux plans espacés, ceux-ci étant articulés de part et d'autre d'un plan transversal du centre de roue vertical (x-x) sur le support de roue (5), l'autre élément de guidage de roue (R2) disposé en dessous de l'axe de rotation de roue (2) consistant en un bras triangulaire (8) et une barre d'accouplement (11), le bras triangulaire (8) - vu dans le sens du déplacement (F) - étant articulé devant le plan transversal du centre de roue vertical (x-x) et le bras triangulaire (8) étant placé dans un plan incliné (Z-Z) par rapport au sens du déplacement (F), et la barre d'accouplement (11) étant logée en aval de ce plan transversal du centre de roue (X-X) sur le support de roue (5), grâce à des caractéristiques de palier harmonisées des éléments de guidage de roue (R1, R2) et à la position de l'axe élastocinématique (14) coopérant avec l'axe entraîné (12) formant un axe de pivotement fictif pour la roue (R) pour toutes les forces agissant sur la roue, des rayons polaires (27, 28) résultant des sens de mouvement prédéterminés de paliers (23, 6) situés côté support de roue des deux bras (10, 3) des éléments de guidage de roue (R1, R2), rayons qui se rencontrent en amont et au-dessus d'un plan horizontal (a-a) s'étendant à travers l'axe de rotation de roue (2) et qui constituent un pôle de tangage (N) pour une antiplongée et un antisquat, les deux bras oscillants transversaux (3, 4) supérieurs constituant conjointement un pôle supérieur (20) fictif pour l'axe entraîné cinématique (12), qui se situe à l'extérieur de l'écartement des roues (S), un point inférieur (22a) pour la position de l'axe entraîné (12) étant constitué par le palier (23) du bras triangulaire (8) qui - vu dans le sens du déplacement (F) - se situe en amont du plan transversal du centre de roue vertical (X-X) et à l'intérieur de l'écartement des roues (S), et les points d'attache (6, 7) des bras oscillants transversaux (3, 4) supérieurs se trouvant sensiblement dans un plan vertical (E) qui s'étend sensiblement en parallèle d'un plan longitudinal du centre de roue (Y-Y), et les points d'attache (22, 23) de la barre d'accouplement (11) du bras triangulaire (8) inférieur se situant dans un autre plan vertical (E1) qui croise le plan vertical (E), **caractérisée en ce que** le pôle supérieur fictif (20) formé par les deux bras oscillants transversaux (3, 4) supérieurs pour l'axe entraîné cinématique (14) se situe au moins également dans le plan transversal du centre de roue vertical (X-X), et **en ce que** le bras oscillant transversal (3) supérieur avant est disposé en croisant le bras de suspension (10) du bras triangulaire (8) inférieur, tout comme le bras oscillant transversal (4) supérieur arrière croise la barre d'accouplement (11) inférieure.

2. Suspension de roue selon la revendication 1, **caractérisée en ce que** les paliers (25, 26) situés côté structure du bras triangulaire (8) présentent une caractéristique (C1) nettement plus rigide dans le sens de sollicitation radial que la caractéristique (C) dans le sens de sollicitation axial, le palier (25) avant situé côté structure présentant une caractéristique plus molle dans le sens radial que le palier (26) arrière situé côté structure.

3. Suspension de roue selon les revendications 1 ou 2, **caractérisée en ce que** les caractéristiques de palier (C2) radiales des deux bras oscillants transversaux (3, 4) supérieurs sont globalement identiques et présentent une caractéristique radiale moins importante que les caractéristiques de palier (C1) des paliers (25, 26) situés côté structure du bras triangulaire (8).

4. Suspension de roue selon les revendications 1, 2 ou 3, **caractérisée en ce que** les caractéristiques de palier (C3) de la barre d'accouplement (11) sont globalement plus rigides que les caractéristiques de palier (C2) radiales des bras oscillants transversaux (3, 4) supérieurs.

5. Suspension de roue selon l'une ou plusieurs des revendications précédentes, **caractérisée en ce que** les caractéristiques de palier harmonisées des éléments de guidage de roue (R1, R2) ainsi que la position de l'axe élastocinématique (14) et de l'axe entraîné (12), pour toutes les forces agissant sur la roue, donnent un axe de pivotement fictif pour la roue provenant de ces deux axes (12) et (14).

6. Suspension de roue selon l'une ou plusieurs des revendications précédentes, **caractérisée en ce que** le palier (40) situé côté support de roue de la jambe à ressort/amortisseur (30) - par rapport au sens du déplacement (F) - est situé plus près du palier (22) situé côté support de roue de la barre d'accouplement (11) que par rapport au palier (23) situé côté support de roue du bras triangulaire (8) inférieur.

7. Suspension de roue selon les revendications 1 ou 6, **caractérisée en ce que** la jambe de ressort/amortisseur (30) est disposée sensiblement en parallèle du plan transversal du centre de roue vertical (X-X).
